## Europäisches Patentamt
## European Patent Office
## Office européen des brevets

(11) Veröffentlichungsnummer: **0 042 999**
**B1**

(12) **EUROPÄISCHE PATENTSCHRIFT**

(45) Veröffentlichungstag der Patentschrift:
02.10.85

(51) Int. Cl.⁴: **G 02 F 7/00, H 03 M 1/00**

(21) Anmeldenummer: **81104332.2**

(22) Anmeldetag: **04.06.81**

(54) **Schneller elektrooptischer Analog/Digital- bzw. Digital/Analog-Wandler.**

(30) Priorität: **02.07.80 DE 3025073**

(43) Veröffentlichungstag der Anmeldung:
**06.01.82 Patentblatt 82/1**

(45) Bekanntmachung des Hinweises auf die Patenterteilung:
**02.10.85 Patentblatt 85/40**

(84) Benannte Vertragsstaaten:
**DE FR GB**

(56) Entgegenhaltungen:
**US - A - 4 058 722**

**IEEE JOURNAL OF QUANTUM ELECTRONICS, Band QE-15, Nr. 4, April 1979, Seiten 210-216, New York, USA H.F. TAYLOR: "An optical analog-to-digital converter-Design and analysis"**
**"Electronics Letters" 10 (1974), pages 508, 509**

(73) Patentinhaber: **Siemens Aktiengesellschaft, Berlin und München Wittelsbacherplatz 2, D-8000 München 2 (DE)**

(72) Erfinder: **Keil, Rudolf, Dipl.-Ing., Reschreiterstrasse 12, D-8000 München 45 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen schnellen elektrooptischen Analog-/Digital- bzw. Digital-/Analog-Wandler nach den Oberbegriffen der Ansprüche 1 bzw. 8.

An den Schnittstellen zwischen peripheren Geräten und Datenverarbeitungsanlagen werden Datenwandler benötigt, die analoge Werte in für die Rechner verarbeitbare digitale Signale umwandeln und umgekehrt. Man verwendet dazu Analog-/Digital- bzw. Digital-/Analog-Wandler. Um auch große Datenmengen pro Zeiteinheit verarbeiten zu können, werden hohe Anforderungen an die Geschwindigkeit der Wandler gestellt.

Bei den derzeit handelsüblichen Wandlern wird versucht, die Datenmenge aufzuteilen und in vielen langsamen Wandlern parallel zu verarbeiten. Dies erfordert zum einen eine große Anzahl Wandler und zum anderen eine relativ komplizierte Logik zur exakten Aufteilung der Daten.

Bei elektronischen N-Bit-Analog-/Digital-Wandlern (Hoeschele Jr. , D. F.: Analog-to-Digital/Digital-to-Analog-Conversion Techniques, Wiley, New York 1968) wird ein zeitabhängiger analoger Spannungsverlauf für diskrete Zeiten, wobei die Intervalle zwischen zwei aufeinanderfolgenden Zeiten jeweils $\Delta t$ betragen, mittels einer Unterteilung der Spannungshöhe in $(2^N - 1)$ Stufen binär codiert. Bei schnellen Wandlereinrichtungen wird mit einer »sample-and-hold«-Schaltung nur für Zeiten erfaßt und verarbeitet, bei denen das Intervall zwischen zwei aufeinanderfolgenden Zeiten $n \cdot \Delta t$ beträgt, so daß n Wandler parallel geschaltet werden müssen. Je genauer das analoge Spannungssignal verarbeitet werden soll, desto feiner müssen die digitalen Unterteilungsstufen des Analog/Digital-Wandlers ausgelegt werden. Bei elektronischen Wandlern ist für jede Unterteilungsstufe ein Komparator notwendig, der das analoge Signal mit einer entsprechenden Referenz vergleicht. Ein elektronischer Analog/Digital-Wandler benötigt für die Codierung eines analogen Signals in 4 Bit somit 15 Komparatoren. Dazu kommt noch eine entsprechende Schaltung für die binäre Codierung der Komparatorausgangssignale.

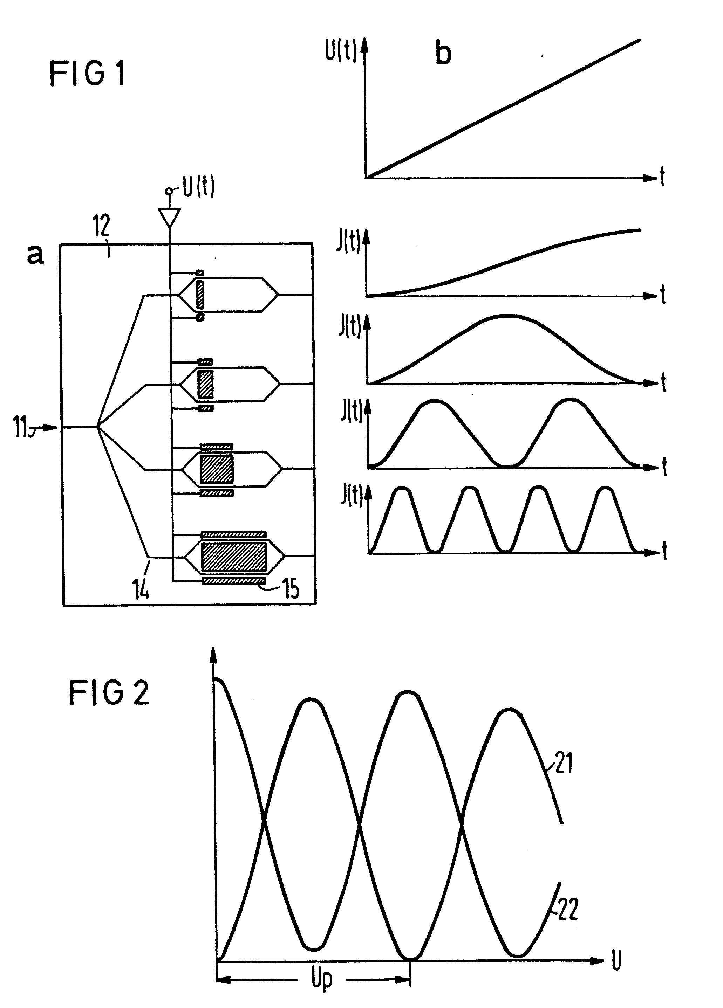

Mit einem elektrooptischen Analog/Digital- bzw. Digital/Analog-Wandler ist es möglich, die potentiell hohen Geschwindigkeiten von optischen Bauelementen zu nutzen. Das Grundelement eines elektrooptischen Analog/Digital-Wandlers ist ein elektrooptischer Intensitätsmodulator, dessen Ausgangsintensität sich periodisch mit einer angelegten, linear ansteigenden Spannung ändert. Dies ist analog der periodischen Änderung des Wertes einer Dualstelle bei binärer Codierung. Ein Bauelement, das diese Eigenschaft besitzt, ist z. B. ein Mach-Zehnder-Modulator (Keil, R.; Auracher, F.: Mach-Zehnder Waveguide Modulators in Ti-Diffused LiNbO₃, Siemens Forschungs- und Entwicklungsberichte 9 (1980), 26). Die Lichtausgangsintensität eines Mach-Zehnder-Modulators hängt vom Phasenunterschied des Lichts in den beiden Interferometerarmen ab, der bei gleicher angelegter Spannung proportional zur Elektrodenlänge ist. Es wurde vorgeschlagen, eine Reihe von integriert-optischen Mach-Zehnder-Modulatoren parallel aufzubauen, bei denen sich die Elektrodenlänge jeweils verdoppelt (Taylor, H. F.; Taylor, M. J.; Bauer, P. W.: Electro-optic analog-to-digital conversion using channel waveguide modulators, Applied Physics Letters 32 (1978), 559). In Fig. 1 sind neben einem derartigen 4-Bit-Analog/Digital-Wandler die Ausgangsintensitäten als Funktion einer linear ansteigenden Eingangsspannung dargestellt. Detektiert man die Lichtleistung in Abhängigkeit einer anliegenden Spannung U(t) in den vier Ausgängen und schaltet jeweils einen Komparator nach, so liegt an den Komparatorausgängen bereits das codierte Signal für U(t) an.

Nachteilig bei einem derartigen elektrooptischen Analog-/Digital-Wandler sind folgende Schwierigkeiten: Die Justierung der Elektroden in bezug auf die Streifenwellenleiter, die Ankopplung eines Lasers an einen Streifenwellenleiter und schließlich die verlustarme Lichtaufteilung auf die einzelnen Modulatoren bzw. die Modulatorarme.

Aus der Zeitschrift »Electronics Letters« 10 (1974), 508—509 ist ein schneller elektrooptischer Analog-/Digital-Wandler bekannt, der ein Phasenbeugungsgitter aufweist. Die Funktion dieses elektrooptischen Wandlers beruht auf der Fraunhofer-Beugung. Die Lichtintensität in der 0'ten Beugungsanordnung ist dabei immer größer Null. Ebenso ist die Lichtablenkung dabei nicht-periodisch. Um annähernd im linearen Bereich der Lichtablenkung zu bleiben, kann dabei nur ein kleiner Anteil des einfallenden Lichtes abgelenkt werden. Die Lichtintensität in den einzelnen Beugungsanordnungen ist dabei eine Funktion von Bessel-Funktionen. Wenn — wie bei dieser Veröffentlichung — die Lichtintensität in den jeweiligen Beugungsordnungen mit einem Fotodetektor nachgewiesen und sodann einem Schwellenvergleicher zugeführt wird, kann der jeweilige Schwellenvergleicher oberhalb einer bestimmten Spannung des umzuwandelnden Analogsignals die zugehörige Schwelle nicht mehr übersteigen. Es können also nur kleine Spannungen von Analogsignalen in digitale Signale umgewandelt werden, außerdem kann nur ein kleiner Anteil des einfallenden Lichtes zur Umwandlung der Signale benutzt werden und schließlich können auch bei Verwendung einer Hilfsspannung nur solche Analogsignale umgewandelt werden, deren digitale Darstellung nicht mehr als 3 Bits erfordert.

Der Erfindung liegt die Aufgabe zugrunde, einen schnellen elektrooptischen Analog-/Digital- bzw. Digital-/Analog-Wandler anzugeben, der die beim Stand der Technik angeführten Nachteile nicht aufweist.

Diese Aufgabe wird erfindungsgemäß durch einen schnellen Analog-/Digital-Wandler nach dem Anspruch 1 und durch einen schnellen Digital-/Analog-Wandler nach dem Anspruch 8 gelöst.

Bei einem schnellen elektrooptischen Analog-/Digital-Wandler sind mehrere planare Bragg-Ablenker zur Erzeugung von ebensovielen Strahlpositionen nebeneinander angeordnet.

Ordnet man mehrere Bragg-Ablenker mit unterschiedlichen Gitterkonstanten nebeneinander an und leuchtet sie gleichzeitig aus, so erhält man ebensoviele Strahlpositionen. Die einzelnen Elektrodenstrukturen müssen dabei so geneigt sein, daß das Licht unter dem jeweiligen Bragg-Winkel auf die betreffende Gitterstruktur fällt.

Das einfallende Licht kann durch eine Gitterstruktur in Teillichtstrahlen aufgeteilt werden, wobei diese Teillichtstrahlen dann auf die Bragg-Ablenker treffen. Diese Gitterstruktur kann z. B. durch Ätzen der Oberfläche oder durch Erzeugen eines Brechzahlgitters hergestellt werden.

Die unterschiedliche Periodizität der Lichtintensität in den einzelnen Strahlpositionen ist ähnlich wie bei der Anordnung mit Mach-Zehnder-Modulatoren durch entsprechend unterschiedlich lange Ablenkerelektroden realisierbar.

Der schnelle elektrooptische Wandler kann durch gemeinsame elektrische Ansteuerung von entsprechend ausgebildeten Ablenkern oder durch unterschiedliche elektrische Ansteuerung von entsprechend ausgebildeten Ablenkern unter Verwendung von Spannungsteilern betrieben werden.

Werden die Elektrodenlängen der Bragg-Ablenker entsprechend bemessen, so wird die Amplitude der angelegten Spannung im Gray-Code verarbeitet.

Bei einem schnellen elektrooptischen Digital/Analog-Wandler sind die planaren Bragg-Ablenker einzeln ansteuerbar, wobei die einzelnen Bragg-Ablenker zur Fokussierung des Lichts auf einen Detektor unterschiedliche Gitterkonstanten und eine dem jeweiligen Bragg-Winkel entsprechende Neigung aufweisen.

An die Bragg-Ablenker kann jeweils eine Dualstelle angeschlossen werden. Entsprechend einem verwendeten binären Code soll mit den einzelnen Bragg-Ablenkern eine der jeweiligen Dualstelle entsprechende Lichtleistung ablenkbar sein.

Die jeweilige Aufteilung des abzulenkenden Lichts kann sowohl durch entsprechend unterschiedliche Fingerzahl der einzelnen Elektroden als auch durch Spannungsteiler erfolgen.

Bevorzugt wird die Umwandlung von BCDcodierten Signalen in eine analoge Lichtintensität.

Ausführungsbeispiele der Erfindung sind in den Zeichnungen dargestellt und werden im folgenden näher beschrieben.

Fig. 1 zeigt einen elektrooptischen 4-Bit-Analog/Digital-Wandler nach dem Stand der Technik mit Mach-Zehnder-Interferometern mit den jeweiligen Lichtausgangsintensitäten bei linear ansteigender Elektrodenspannung.

Fig. 2 zeigt die durchgehende und die abgelenkte Lichtleistung als Funktion der Elektrodenspannung bei einem elektrooptischen Bragg-Ablenker.

Fig. 3 zeigt die Elektrodenanordnung eines elektrooptischen Analog/Digital-Wandlers mit Bragg-Ablenkern.

Fig. 4 zeigt eine Prinzipschaltung eines elektrooptischen 4-Bit-Analog/Digital-Wandlers.

Fig. 5 zeigt die Elektrodenanordnung eines elektrooptischen 4-Bit-Digital/Analog-Wandlers mit Bragg-Ablenkern mit unterschiedlicher Fingerzahl.

Fig. 6 zeigt die Elektrodenanordnung eines elektrooptischen 4-Bit-Digital/Analog-Wandlers mit Bragg-Ablenkern mit Spannungsteilern zur Aufteilung des Lichts.

Fig. 2 zeigt die durchgehende Lichtleistung 22 und die abgelenkte Lichtleistung 21 eines Bragg-Ablenkers als Funktion der Elektrodenspannung. Planare elektrooptische Bragg-Ablenker (Hammer, J. M.; Phillips, W.: Low-loss single-mode optical waveguides and efficient high-speed modulators of $LiNb_xTa_{1-x}O_3$ on $LiTaO_3$, Applied Physics Letters 24 (1974), 545) sind Bauelemente, bei denen die Intensität des abgelenkten Lichts ähnlich wie bei einem Mach-Zehnder-Modulator periodisch von der angelegten elektrischen Spannung abhängt. Die notwendige Elektrodenspannung $U_p$ zum Durchlaufen einer Lichtleistungsperiode ist umgekehrt proportional der Elektrodenlänge.

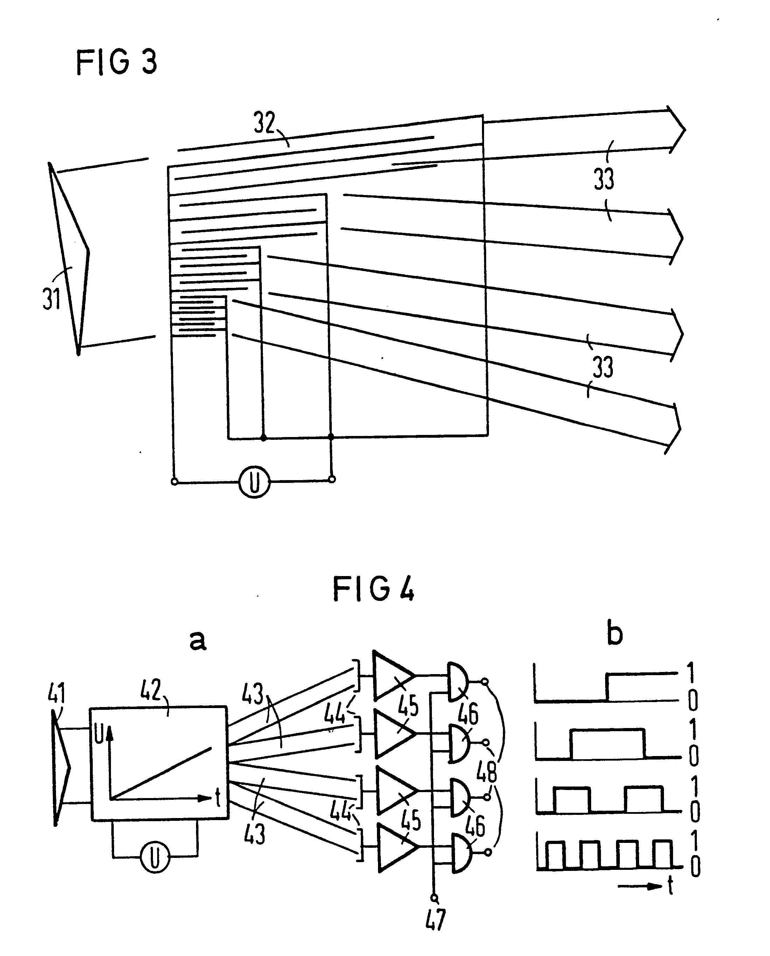

Fig. 3 zeigt die Elektrodenanordnung eines elektrooptischen Analog/Digital-Wandlers mit Bragg-Ablenkern. Die Elektrodenlängen sind dabei so gewählt, daß man bei gemeinsamer elektrischer Ansteuerung die gleiche Spannungsabhängigkeit der Lichtintensität wie bei der in Fig. 1 gezeigten Anordnung erhält. Das auf die Elektrodenstruktur 32 auftreffende Licht 31 wird in verschiedene Teilstrahlen 33 abgelenkt.

Fig. 4 zeigt den kompletten Aufbau eines derartigen 4-Bit-Analog/Digital-Wandlers. Das einfallende Licht 41 wird im elektrooptischen Wandler 42 durch z. B. eine linear ansteigende Spannung in vier modulierte Lichtstrahlen 43 aufgeteilt. Die einzelnen Lichtintensitäten werden von den Detektoren 44 empfangen, gegebenenfalls mittels der Verstärker 45 verstärkt und in jeweils einem Komparator 46 in Rechtecksignale umgewandelt. Das an den vier Komparatorausgängen anliegende Signal ist die im Gray-Code verarbeitete und in 4 Bit dargestellte Größe der elektrischen Spannungsamplitude.

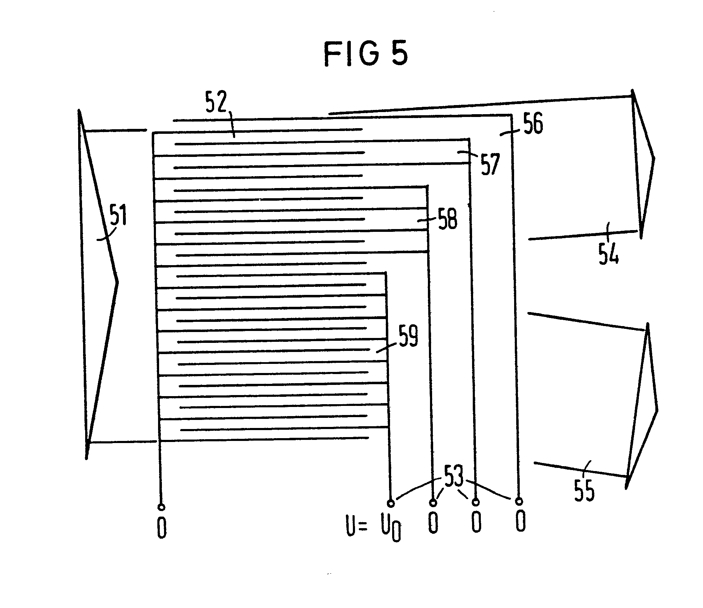

Fig. 5 zeigt die Elektrodenanordnung eines elektrooptischen 4-Bit-Digital/Analog-Wandlers mit Bragg-Ablenkern 56, 57, 58, 59 mit unterschiedlicher Fingerzahl. Werden Bragg-Ablenker verwendet, so ist es im Gegensatz zum Stand der Technik möglich, sowohl Analog/Digital-Wandler als auch Digital/Analog-Wandler elektrooptisch aufzubauen. Mit einer relativ einfachen Anordnung von Bragg-Ablenkern 52 ist es möglich, einen Digital/Analog-Wandler aufzubauen, der BCD-codierte Signale 53 direkt in eine analoge Lichtintensität 55 umwandelt. Die Elektrodenstruktur 52 besteht aus vier einzeln ansteuerbaren Bragg-Ablenkern 56, 57, 58, 59, an denen jeweils eine Dualstelle angeschlossen wird. Der Bragg-Ablenker 56 weist zwei, der Bragg-Ablenker 57 vier, der Bragg-Ablenker 58 acht und der Bragg-Ablenker 59 sechzehn Elektrodenfinger auf. Lenkt man mit den einzelnen Ablenkern 56, 57, 58, 59 entsprechend der jeweiligen Dualstelle die ein- (mit Ablenker 56), zwei- (mit Ablenker 57), vier- (mit Ablenker 58) bzw. achtfache (mit Ablenker 59) Lichtleistung aus dem einfallenden Licht 51 ab, so entspricht die Summe der abgelenkten Lichtleistung 55 der binär codierten Größe 53. Mit 54 ist der nichtabgelenkte, durchgehende Anteil des einfallenden Lichts 51 bezeichnet. In Fig. 5 ist als Beispiel für eine BCD-codierte Größe 53 das Signal U = $U_0$ 0 0 0 angegeben.

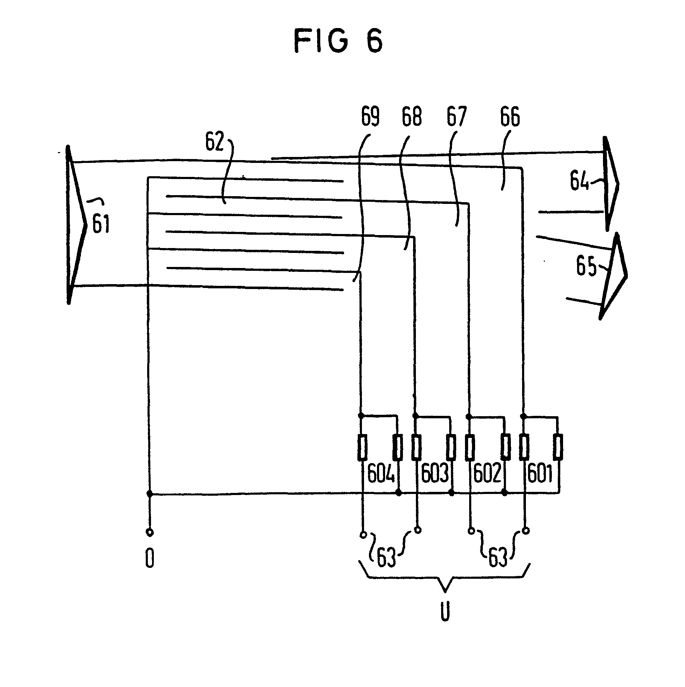

Fig. 6 zeigt die Elektrodenanordnung eines elektrooptischen 4-Bit-Digital/Analog-Wandlers mit Bragg-Ablenkern 66, 67, 68, 69 mit Spannungsteilern 601, 602, 603, 604 zur Aufteilung des Lichts 61. Mit dieser Anordnung ist es möglich, einen Digital/Analog-Wandler aufzubauen, der BCD-codierte Signale direkt in eine analoge Lichtintensität 65 umwandelt. Die Elektrodenstruktur 62 besteht aus vier einzeln ansteuerbaren Bragg-Ablenkern 66, 67, 68, 69, an denen jeweils eine Dualstelle angeschlossen wird. Die Spannungsteiler 601, 602, 603, 604 sorgen dafür, daß entsprechend der jeweiligen Dualstelle mit dem Bragg-Ablenker 66 die einfache, mit dem Bragg-Ablenker 67 die zweifache, mit dem Bragg-Ablenker 68 die vierfache und mit dem Bragg-Ablenker 69 die achtfache Lichtleistung aus dem einfallenden Licht 61 abgelenkt wird. Die Summe der abgelenkten Lichtleistung 65 entspricht der binär codierten Größe 63. Mit 64 ist der nichtabgelenkte, durchgehende Anteil des einfallenden Lichts 61 bezeichnet.

Die Anordnungen nach Fig. 5 und Fig. 6 können auch kombiniert werden. Der Spannungsteiler 604 kann bei entsprechender Ausbildung der Spannungsteiler 601, 602, 603 auch weggelassen werden.

Vorteilhafterweise wird bei elektrooptischen Wandlern ein gepulster (mode-locked) Laser verwendet, so daß die sample-and-hold-Schaltung eingespart werden kann.

**Patentansprüche**

1. Schneller elektrooptischer Analog-/Digital-Wandler mit einem planaren Phasenbeugungsgitter, wobei das Analogsignal als elektrisches Spannungssignal an eine gitterförmige Elektrodenstruktur angelegt wird, und wobei die Intensitäten der einzelnen abgelenkten Lichtstrahlen die Dualstellen des digitalen Ausgangssignals ergeben, dadurch gekennzeichnet, daß mehrere planare Bragg-Ablenker, für deren jeden die Lichtintensität der gebeugten Strahlen von der angelegten elektrischen Spannung mit einer anderen Periode periodisch abhängt, zur Erzeugung von ebenso vielen Strahlpositionen aus der Richtung des einfallenden Lichtbündels gesehen nebeneinander in diesem angeordnet sind, wobei die Bragg-Ablenker so geneigt sind, daß das Licht unter dem jeweiligen Bragg-Winkel auf die betreffende Gitterstruktur einfällt.

2. Schneller elektrooptischer Analog-/Digital-Wandler nach Anspruch 1, dadurch gekennzeichnet, daß die Bragg-Ablenker unterschiedliche Gitterkonstanten aufweisen.

3. Schneller elektrooptischer Analog-/Digital-Wandler nach einem der Ansprüche 1 oder 2, dadurch gekennzeichnet, daß das einfallende Licht durch eine Gitterstruktur in Teillichtstrahlen aufgeteilt wird, wobei diese Teillichtstrahlen dann auf die Bragg-Ablenker treffen.

4. Schneller elektrooptischer Analog-/Digital-Wandler nach einem der Ansprüche 1 bis 3, dadurch gekennzeichnet, daß die unterschiedliche Periodizität der Lichtintensität in den einzelnen Strahlpositionen durch entsprechend unterschiedlich lange Ablenker-Elektroden realisiert ist.

5. Schneller elektrooptischer Analog-/Digital-Wandler nach einem der Ansprüche 1 bis 4, gekennzeichnet durch gemeinsame elektrische Ansteuerung der Ablenker.

6. Schneller elektrooptischer Analog-/Digital-Wandler nach einem der Ansprüche 1 bis 5, gekennzeichnet durch unterschiedliche elektrische Ansteuerung der Ablenker unter Verwendung von Spannungsteilern.

7. Schneller elektrooptischer Analog-/Digital-Wandler nach Anspruch 5, dadurch gekennzeichnet, daß die Elektrodenlängen so bemessen sind, daß die Amplitude der angelegten Spannung im Gray-Code verarbeitet wird.

8. Schneller elektrooptischer Digital-/Analog-Wandler, dadurch gekennzeichnet, daß mehrere planare Bragg-Ablenker aus der Richtung des einfallenden Lichtbündels gesehen nebeneinander in diesem so angeordnet sind, daß jeder der Ablenker bei Ansteuerung eine andere, der jeweiligen Dualstelle entsprechende Lichtleistung ablenkt, wobei die Bragg-Ablenker so geneigt sind, daß zur gemeinsamen Fokussierung des abgelenkten Lichtes auf einen Detektor das einfallende Licht unter dem jeweiligen Bragg-Winkel auf die betreffende Gitterstruktur auftrifft, wobei die Dualstellen des digitalen Signals als elektrische Spannungssignale an die einzelnen, den Bragg-Ablenkern zugeordneten, gitterförmigen Elektrodenstrukturen angelegt werden, und wobei entsprechend diesem digitalen Signal das einfallende Licht an dem jeweiligen Bragg-Ablenker abgelenkt wird.

9. Schneller elektrooptischer Digital-/Analog-Wandler nach Anspruch 8, dadurch gekennzeichnet, daß die einzelnen Bragg-Ablenker unterschiedliche Gitterkonstanten aufweisen.

10. Schneller elektrooptischer Digital-/Analog-Wandler nach einem der Ansprüche 8 und 9, gekennzeichnet durch unterschiedliche Fingerzahl der einzelnen Bragg-Ablenker zur Aufteilung

7    **0 042 999**    8

des Lichtes.

11. Schneller elektrooptischer Digital-/Analog-Wandler nach einem der Ansprüche 8 bis 10, gekennzeichnet durch Spannungsteiler zur Aufteilung des Lichtes.

12. Schneller elektrooptischer Digital-/Analog-Wandler nach Anspruch 10 oder 11, gekennzeichnet durch die Umwandlung BCD-codierter Signale in eine analoge Lichtintensität.

## Claims

1. A high-speed, electro-optical analogue/digital converter, having a planar phase diffraction grid, where the analogue signal is connected, as electric voltage signal, to a grid-like electrode structure, and where the intensities of the individual, deflected light rays produce the dual digits of the digital output signal, characterised in that a plurality of planar Bragg deflectors, for each of which the light intensity of the diffracted rays is perioddependent upon the connected electric voltage with a different period, for the production of an equal number of ray positions, considered from the direction of the oncoming light beam, are arranged one beside another in this beam, where the Bragg deflectors are inclined in such manner that light hits are relevant grid structure at the respective Bragg angle.

2. A high-speed, electro-optical analogue/digital converter as claimed in claim 1, characterised in that the Bragg deflectors have different grid constants.

3. A high-speed, electro-optical analogue/digital converter as claimed in one of the claims 1 or 2, characterised in that the oncoming light is divided by means of a grid structure into subsidiary light rays, and these subsidiary light rays then hit the Bragg deflectors.

4. A high-speed, electro-optical analogue/digital converter as claimed in one of the claims 1 to 3, characterised in that the different periodicity of the light intensity in the individual ray positions is achieved by means of deflector electrodes of correspondingly different length.

5. A high-speed, electro-optical analogue/digital converter as claimed in one of the claims 1 to 4, characterised by a common electrical drive of the deflectors.

6. A high-speed, electro-optical analogue/digital converter as claimed in one of the claims 1 to 5, characterised by a different electrical drive of the deflectors, using voltage dividers.

7. A high-speed, electro-optical analogue/digital converter as claimed in claim 5, characterised in that the electrode lengths are contrived to be such that the amplitude of the connected voltage is processed in the Gray code.

8. A high-speed, electro-optical digital/analogue converter, characterised in that a plurality of planar Bragg deflectors, considered from the direction of the oncoming light beam, are arranged one beside another in this light beam in such manner that when driven, each of the deflectors deflects a different light power corresponding to the relevant dual digit, where the Bragg deflectors are inclined in such manner that in order commonly to focus the deflected light on to a deflector, the oncoming light hits the relevant grid structure at the respective Bragg angle, where the dual digits of the digital signal are connected, in the form of electrical voltage signals, to the individual, grid-like electrode structures which are assigned to the Bragg deflectors, and where, in accordance with this digital signal, the oncoming light is deflected by the relevant Bragg deflector.

9. A high-speed, electro-optical digital/analogue converter as claimed in claim 8, characterised in that the individual Bragg deflectors have different grid constants.

10. A high-speed, electro-optical digital/analogue converter as claimed in one of the claims 8 and 9, characterised by the fact that the individual Bragg deflectors have different numbers of fingers for the distribution of light.

11. A high-speed, electro-optical digital/analogue converter as claimed in one of the claims 8 to 10, characterised by voltage dividers for the distribution of the light.

12. A high-speed, electro-optical digital/analogue converter as claimed in claim 10 or 11, characterised by the conversion of BCD-codes signals into an analogue light intensity.

## Revendications

1. Convertisseur électro-optique analogique-numérique rapide, avec un réseau de diffraction de phase planar, avec application du signal analogique comme un signal de tension électrique à une structure d'électrodes en forme de réseau, les intensités des différents rayons lumineux déviés fournissant les positions binaires du signal de sortie numérique, caractérisé en ce que plusieurs déviateurs de Bragg planars, pour chacun desquels l'intensité lumineuse des rayons diffractés dépend périodiquement de la tension électrique appliquée avec une autre période, sont disposés dans le faisceau lumineux incident, les uns à côté des autres vus dans la direction de ce faisceau, pour la production d'autant de positions de rayons, les déviateurs de Bragg étant inclinés de manière que la lumière tombe sous l'angle de Bragg correspondant sur la structure de réseau concernée.

2. Convertisseur électro-optique analogique-numérique rapide selon la revendication 1, caractérisé en ce que les déviateurs de Bragg présentent des constantes de réseau différentes.

3. Convertisseur électro-optique analogique-numérique rapide selon la revendication 1 ou 2, caractérisé en ce que la lumière incidente est répartie par une structure de réseau en rayons lumineux partiels, lesquels tombent ensuite sur les déviateurs de Bragg.

4. Convertisseur électro-optique analogique-numérique rapide selon l'une des revendica-

5

tions 1 à 3, caractérisé en ce que la périodicité différente de l'intensité lumineuse dans les différentes positions de rayons est réalisée par des électrodes de déviateurs de différentes longueurs correspondantes.

5. Convertisseur électro-optique analogique-numérique rapide selon l'une des revendications 1 à 4, caractérisé par une commande électrique commune des déviateurs.

6. Convertisseur électro-optique analogique-numérique rapide selon l'une des revendications 1 à 5, caractérisé par une commande électrique différente des déviateurs, avec utilisation de diviseurs de tension.

7. Convertisseur électro-optique analogique-numérique rapide selon la revendication 5, caractérisé en ce que les longueurs des électrodes sont fixées de manière que l'amplitude de la tension appliquée soit traduite en code Gray.

8. Convertisseur électro-optique numérique-analogique rapide, caractérisé en ce que plusieurs déviateurs de Bragg planars sont disposés dans le faisceau incident, les uns à côté des autres dans la direction de ce faisceau, de manière que chacun des déviateurs, lorsqu'il est commandé, dévie une puissance lumineuse différente, correspondant à la position binaire associée, les déviateurs de Bragg étant inclinés de manière que, pour la focalisation commune de la lumière déviée sur un détecteur, la lumière incidente tombe chaque fois sous l'angle de Bragg associé sur la structure de réseau-concernée, les positions binaires du signal numérique étant appliquées en tant que signaux de tension électrique aux différentes structures d'électrodes en forme de réseau, conjuguée aux déviateurs de Bragg, et la lumière incidente étant déviée sur le déviateur de Bragg concerné suivant ce signal numérique.

9. Convertisseur électro-optique numérique-analogique rapide selon la revendication 8, caractérisé en ce que les différents déviateurs de Bragg présentent des constantes de réseau différentes.

10. Convertisseur électro-optique numérique-analogique rapide selon la revendication 8 ou 9, caractérisé en ce que les différents déviateurs de Bragg présentent des nombres de doigts différents pour la répartition de la lumière.

11. Convertisseur électro-optique numérique-analogique rapide selon l'une des revendications 8 à 10, caractérisé en ce que la répartition de la lumière s'effectue à l'aide de diviseurs de tension.

12. Convertisseur électro-optique numérique-analogique rapide selon la revendication 10 ou 11, caractérisé par la conversion de signaux codés BCD en une intensité lumineuse analogique.

0 042 999

FIG 1

FIG 2

7

## FIG 3

## FIG 4

# FIG 5

$U = U_0$

# FIG 6